# NEW EUROPEAN PATENT SPECIFICATION

(11) **EP 0 874 872 B2**
(45) Date of publication and mention of the opposition decision: **15.08.2007**
(45) Mention of the grant of the patent: 18.04.2001
(21) Application number: 96943267.3
(22) Date of filing: 12.12.1996
(51) Int. Cl.: C08J 5/18, C08L 23/08, B32B 27/32

(54) **FILM HAVING EXCELLENT INK ADHESION IN COMBINATION WITH ENHANCED SLIP, ANTIFOG, AND/OR ANTISTATIC PROPERTIES**
FOLIE MIT AUSGEZEICHNETER FARBHAFTUNG UND MIT VERBESSERTEN SCHLUPF-, ANTIBESCHLAG- UND/ODER ANTISTATIK-EIGENSCHAFTEN
FILM PRESENTANT UNE EXCELLENTE ADHESIVITE DE L'ENCRE ASSOCIEE A UNE AMELIORATION DES PROPRIETES DE GLISSEMENT, ANTIBUEE ET/OU ANTISTATIQUES

(30) Priority: 15.12.1995 US 573011
(43) Date of publication of application: 04.11.1998
(73) Proprietor: Cryovac, Inc., Duncan, S.C. 29334-0464 (US)
(72) Inventor: BEKELE, Solomon, Taylors, SC 29687 (US)
(74) Representative: Senior, Alan Murray
(86) International application number: PCT/IB1996/001484
(87) International publication number: WO 1997/022655

(56) References cited:
- EP-A- 0 136 059
- EP-A- 0 308 131
- EP-A- 0 356 220
- EP-A- 0 597 502
- EP-A2- 0 620 114
- WO-A-89/03310
- WO-A-94/03328
- GB-A- 1 035 165
- US-A- 3 845 163
- US-A- 4 436 788
- US-A- 4 868 052
- US-A- 5 330 831
- PATENT ABSTRACTS OF JAPAN vol. 010, no. 123 (C-344), 8 May 1986 & JP 60 248741 A (AKIRESU KK), 9 December 1985, & DATABASE WPI Derwent Publications Ltd., London, GB; AN 86-025661
- PATENT ABSTRACTS OF JAPAN vol. 006, no. 057 (C-098), 14 April 1982 & JP 57 002351 A (SUMITOMO CHEM CO LTD), 7 January 1982, & DATABASE WPI Derwent Publications Ltd., London, GB; AN 82-12680e
- PATENT ABSTRACTS OF JAPAN vol. 013, no. 369 (M-860), 16 August 1989 & JP 01 124558 A (IDEMITSU PETROCHEM CO LTD), 17 May 1989, & DATABASE WPI Derwent Publications Ltd., London, GB; AN 89-187439
- Rosato'S Plastics Encyclopedia and Dictionary

## Description

The present invention relates generally to printed articles, particularly films having printing thereon, including both monolayer films and multilayer films, especially films suitable for use as packaging films. The present invention also relates to packaged products comprising a product packaged in a film. The present invention is particularly related to films having a relatively low film-to-film and film-to-metal coefficient of friction, wherein the films also have good ink adhesion characteristics.

For some time is has also been known to incorporate a slip agent into an outer film layer, in order to reduce the film-to-film coefficient of friction and film-to-metal coefficient of friction. Even if the slip agent is added to an inner film layer, the slip agent may migrate (i.e., "bloom") to one or more outer surface(s) of the film, thereby becoming effective in decreasing the film-to-film coefficient of friction, to provide a film which slides more easily against itself and other materials. However, it has been found that the presence of the slip agent on the surface of the film adversely affects the printability of the film, i.e., that the degree of adhesion of ink to the surface of the film is reduced by the presence of the slip agent on the film surface. In a similar manner, the presence of antifog agents as well as antistatic agents on the surface of the film have also been found to adversely affect the printability of film.

In order to provide a film which has good machinability during, for example, the converting of the film into bags, as well as during processing on high speed packaging machinery, for some time it has been known to provide loose dust, e.g., loose corn starch dust, on an outer surface of a film. That is, dust applied to the surface of the film lowers the film-to-film coefficient of friction, i.e., acts as a slip agent (lubricant), as well as improving the resistance of the film to "blocking", i.e, as an anti-blocking agent. For some time it has also been known to incorporate particulate antiblocking agent into the resin. The incorporated antiblocking agent functions by forming minute protrusions that maintain separating air spaces that interfere with adhesion, i.e., blocking.

However, the application of loose dust to a film surface is detrimental to the quality of the atmosphere in which the film is manufactured and used, as the dust is subject to sloughing off of the film during shipping, etc., and other undesirable effects. Furthermore, films having particulate antiblocking agent incorporated into the resin do not posses a desired combination of slip and antiblock properties.

It would be desirable to provide a film having good printability while at the same time having a low film-to-film coefficient of friction and a low film-to-metal coefficient of friction. It would also be desirable to provide an article, such as a bag, having the combination of good printability, low film-to-film and film-to-metal coefficients to friction, in the absence of loose particulate dust on the outside surface thereof.

GB-A-1,035,165 discloses polymeric coating compositions comprising a polyolefin blended with a copolymer of an olefin with a vinyl ester which are said to have good adhesion to paper and to printing inks.

It has been discovered that a desired combination of good ink adhesion together with a low film-to-film and film-to-metal coefficients of friction, and/or good antifog characteristics, and/or good antistatic characteristics, can be achieved by providing an outer film layer with a slip, agent in combination with a polymer which enhances the adhesion of ink to the surface of the film, even in the presence of the slip agent. In this manner, the film is provided with slip, properties as well as enhanced ink adhesion thereto. Optionally, the machinability of the film can be further improved by the addition of dust to the surface of the film, and/or the addition of particulate antiblocking agent within the outer film layer.

As a first aspect, the present invention is directed to a film having printing on the outer surface thereof, wherein the outer layer of the film comprises:
(A) a primary polymer;
(B) a secondary polymer different from the primary polymer and which is effective to enhance ink adhesion to the outer surface, which secondary polymer is an alpha-olefin/acrylic ester copolymer (preferably ethylene/acrylic ester copolymer), alpha-olefin/unsaturated carboxylic acid copolymer (preferably alpha-olefin/acrylic acid copolymer), alpha-olefin/ionomer copolymer or an anhydride grafted ethylene/vinyl acetate copolymer or an alpha-olefin/ester acid anhydride terpolymer; and
(C) a functional additive comprising a slip agent, comprising at least one fatty acid amide having a C₁₁ to C₂₁ alkyl group in the acid chain, oxidized polyethylene wax, fatty acid ester, fatty acid alcohol, glycerol monostearate or metallic stearate.
The outer layer of the film may further comprise an antifog agent or an antistatic agent.

The film can be in the form of a seamless tubing, a backseamed tubing, or a flat film, any of which can be converted into a bag, for example, end-seal and side-seal bags, which can optionally have a patch thereon. The printing on the outer layer can comprise any printing ink suitable for printing on plastic compositions, as is well known to those of skill in the art.

Preferably, the primary polymer comprises at least one member selected from the group consisting of ethylene/vinyl acetate copolymer, ethylene/alphaolefin copolymer; polyolefin homopolymer, polyvinylidene chloride, ethylene/vinyl alcohol copolymer, polyamide, polyester, polystyrene, and ionomer. Propylene/ethylene copolymer is a particularly preferred ethylene/alpha-olefin for use as the primary polymer in the film according to the present invention. Preferably, the primary polymer is present in an amount of at least 60 weight percent, based on the weight of the outer layer; more preferably, in an amount of from about 60 to 99 weight percent; still more preferably, in an amount of from about 80 to 95 weight percent; yet still more preferably, from about 85 to 95 weight percent.

The secondary polymer more preferably comprises at least one member selected from the group consisting of alpha-olefin/acid ionomer copolymer and anhydride grafted alpha-olefin/acrylic ester copolymer. Preferred alphaolefin/acrylic ester copolymers include ethylene/butyl acrylate copolymer, ethylene/methyl acrylate copolymer, and ethylene/ethyl acrylate copolymer. Preferred alpha-olefin acid copolymers include alpha-olefin/acrylic acid copolymer (especially alpha-olefin/ionomer copolymer and ethylene/acrylic acid copolymer). Other preferred secondary polymers include alpha-olefin/ester/acid anhydride terpolymer, more preferably ethylene/acrylic ester/maleic anhydride terpolymer, ethylene/butyl acrylate/maleic anhydride terpolymer, ethylene/methyl acrylate/maleic anhydride terpolymer, and ethylene/ethyl acrylate/maleic anhydride terpolymer. If the primary polymer comprises ionomer and/or an alpha-olefin/acid copolymer, the secondary polymer is different from the primary polymer.

In the film according to the present invention, preferably the secondary polymer is present in an amount of at least 0.5 weight percent, based on the weight of the outer layer; more preferably, in an amount of from about 1 to 40 weight percent; still more preferably, in an amount of from about 1 to 20 weight percent; yet still more preferably, from about 2 to 10 weight percent.

The outer film layer comprises a slip agent. The slip agent comprises at least one member selected from the group consisting of fatty acid amide having a C₁₁ to C₂₁ alkyl group in the acid chain, oxidized polyethylene wax, fatty acid ester, fatty acid alcohol, glycerol monostearate, and metallic stearate. Preferred fatty acid amides comprise at least one member selected from the group consisting of erucamide, lauramide, palmitamide, stearamide (ethylene bis-stearamide), arachidamide, behenamide, oleamide, glycerol monostearate, and metallic stearate (e.g., calcium stearate).

The antifog agent which can be present in the film according to the present invention is a surface-active agent component which preferably comprises at least one member selected from the group consisting of ester of fatty acid ester (and derivatives thereof, aliphatic alcohol, polyether, polyhydric alcohol, ester of polyhydric aliphatic alcohol, and polyethoxylated aromatic alcohol.

The antistatic agent which can be present in the film according to the present invention include any antistatic agents known to those of skill in the art. Preferred antistatic agents include glycerols, ethoxylated amines, and amine salts.

In the film according to the present invention, the slip agent, antistatic agent, and/or antifog agent can each be present in the outer layer in an amount of from about 0.005 to 5 weight percent, based on the weight of the outer layer; more preferably, from about 0.01 to 1 weight percent; still more preferably, from about 0.015 to 0.7 weight percent; yet still more preferably, from about 0.02 to 0.1 weight percent; and even yet still more preferably, from about 0.02 to 0.05 weight percent.

In the film according to the present invention, optionally the outer film layer further comprises inorganic substantially spherical particulates having an average particle size of from about 0.1 to 30 µm; more preferably, having a particle size of from about 1 to 20 µm still more preferably, from about 3 to 10 µm; and yet still more preferably, from about 3 to 4 µm. Preferably the substantially spherical particulates are present in the outer film layer in an amount of from about 500 to 50,000 parts per million, based on the weight of the outer film layer; more preferably, from about 1,000 to 30,000 ppm; still more preferably, from about 2,000 to 20,000 ppm; and yet still more preferably, from about 4,000 to 8,000 ppm. Preferably, the substantially spherical particulates comprise at least one member selected the group consisting of silica and silicate; more preferably, the substantially spherical particulates comprise at least one member selected the group consisting of natural silica, synthetic silica, and silicate; still more preferably, the substantially spherical particulates comprise at least one member selected the group consisting of diatomaceous earth, fumed synthetic silica, precipitated synthetic silica, gelled synthetic silica, sodium calcium silicate, and sodium calcium aluminum silicate.

Although the film according to the present invention can be a monolayer film, preferably the film according to the present invention is a multilayer film comprising two outer layers, and wherein the composition is present in at least one of the outer layers. More preferably, the multilayer film comprises an O₂-barrier layer comprising at least one member selected from the group consisting of polyvinylidene chloride, ethylene/vinyl alcohol copolymer, polyamide, and polyester.

Still more preferably, the multilayer film comprises an outer first layer, an inner second layer, and an outer third layer, wherein: (a) the outer first layer comprises at least one member selected from the group consisting of ethylene/vinyl acetate copolymer, ethylene/alpha-olefin copolymer, and polyamide; (b) the inner second layer is an O₂-barrier layer, and comprises at least one member selected from the group consisting of polyvinylidene chloride, ethylene/vinyl alcohol copolymer, polyamide, and polyester; and (c) the outer third layer comprises at least one member selected from the group consisting of ethylene/vinyl acetate copolymer, ethylene/alpha-olefin copolymer, and polyamide.

Yet still more preferably, the multilayer film further comprises an inner fourth layer which serves as a tie layer and comprises at least one member selected from the group consisting of ethylene/carboxylic acid copolymer, ethylene/ester copolymer, and anhydride modified ethylene/alpha-olefin copolymer. Even yet still more preferably, the fourth layer is between the first layer and the second layer, with the multilayer film further comprising an inner fifth layer, the fifth layer being a second tie layer, the fifth layer comprising at least one member selected from the group consisting of ethylene/carboxylic acid copolymer, ethylene/ester copolymer, and anhydride modified ethylene/alphaolefin copolymer, the fifth layer being between the second layer and the third layer.

Optionally, the multilayer film further comprises an inner fourth layer which is between the first layer and the second layer, which also comprises at least one member selected from the group consisting of ethylene/vinyl acetate copolymer, ethylene/alpha-olefin copolymer, and polyamide. Even yet still more preferably, the third layer and the fourth layer each comprise crosslinked polymer, and the first and second layer do not comprise crosslinked polymer. Still even more preferably, the multilayer film further comprises a fifth layer and a sixth layer. The fifth layer serves as a first tie layer, and comprises at least one member selected from the group consisting of ethylene/carboxylic acid copolymer, ethylene/ester copolymer, and anhydride-modified ethylene/alpha-olefin copolymer. The sixth layer serves as a second tie layer and comprises at least one member selected from the group consisting of ethylene/carboxylic acid copolymer, ethylene/ester copolymer, and anhydride-modified ethylene/alpha-olefin copolymer. The fifth layer is between the first layer and the second layer, the sixth layer is between the second layer and the fourth layer. This preferred multilayer film is most suitable for use as a barrier bag, as well as other end uses. Alternatively, for higher temperature end use, such as cook-in end use, all layers of the multilayer film comprise crosslinked polymer.

Preferably, the multilayer film according to the present invention is substantially symmetrical with respect to both layer thickness and layer chemical composition.

Preferably, the multilayer film according to the present invention is biaxially oriented and heat-shrinkable. More preferably, the film is has a total free shrink, at 85°C (185°F), of from about 10 to 140 percent; more preferably, from about 20 to 110 percent. Preferably, the film has a free shrink at 85°C (185°F) of at least 20 percent in the machine direction and at least 30 percent in the transverse direction.

As a second aspect, the present invention pertains to a bag comprising a film having printing thereon, the film being a film according to the present invention as set forth above. Preferably, the bag comprises a preferred film as set forth above. The bag can be an end-seal bag or a side-seal bag. A preferred bag is an end-scal bag, ir which a film according to the present invention, in the form of a seamless tubing, is sealed and cut thereacross in order to result in an end-seal bag. A preferred end-seal bag comprises the film according to the invention and has a dustless outside surface, with an inside surface having dust hereon to prevent inside surface of the film from blocking to itself. Preferably, the dust on the inside surface of the bag comprises at least one member selected from the group consisting of aluminum silica, silicon dioxide, sodium calcium alumino silicate, magnesium silicate, and calcium silicate; more preferably, the dust comprises at least one member selected from the group consisting of corn starch, potato starch, talc, and silica. If the bag is produced from a film tubing, the tubing can be seamless tubing, or can comprise a longitudinal seam. Aside from bags, a film according to the present invention can also be converted into a casing (both seamless and backseamed casings), which are especially useful for cook-in end use.

As a third aspect, the present invention pertains to an article having printing on a surface thereof. The printed surface comprises a primary polymer, a secondary polymer, and a functional additive as hereinbefore defined. Preferred compositions and amounts of primary polymer, secondary polymer, and functional additives are as set forth for the preferred films according to the present invention. The printed surface may further comprise inorganic substantially spherical particulates having an average particle size of from about 0.1 to 30 µm.

Figure 1 illustrates a schematic cross-sectional view of a preferred multilayer film according to the present invention.

Figure 2 illustrates a schematic view of a process for producing multilayer films in accordance with the present invention.

As used herein, the term "film" is used in a generic sense to include plastic web, regardless of whether it is film or sheet. Preferably, the film has a thickness of less than 0.25 mm.

As used herein, the term "packaged product" refers to a product packaged in a packaging material, such as a film.

As used herein, the phrases "seal layer", "sealing layer", "heat seal layer", and "sealant layer", refer to an outer film layer, or layers, involved in the sealing of the film to itself, another film layer of the same or another film, and/or another article which is not a film. As used herein, the term "seal" refers to any seal of a first region of a film surface to a second region of a film surface, wherein the seal is formed by heating the regions to at least their respective seal initiation temperatures. The heating can be performed by any one or more of a wide variety of manners, such as using a hot wire, hot knife, heated bar, hot air, infrared radiation, ultrasonic sealing, etc. More preferably, the seal is formed by hot wire and/or hot knife. As is known to those of skill in the art, a static lap seal is another seal useful in forming a package from the film of the present invention.

As used herein, the term "oriented" refers to a polymer-containing composition which has been stretched at an elevated temperature (the orientation temperature), followed by being "set" in the stretched configuration by cooling the material while substantially retaining the stretched dimensions. Upon subsequently heating unrestrained, unannealed, oriented polymer-containing composition to its orientation temperature, heat shrinkage is produced. More particularly, the term "oriented", as used herein, refers to oriented films, wherein the orientation can be produced in one or more of a variety of manners.

As used herein, the term "monomer" refers to a relatively simple compound, usually containing carbon and of low molecular weight, which can react to form a polymer by combining with itself or with other similar molecules or compounds.

As used herein, the term "comonomer" refers to a monomer which is copolymerized with at least one different monomer in a copolymerization reaction, the result of which is a copolymer.

As used herein, the term "polymer" refers to the product of a polymerization reaction, and is inclusive of homopolymers, copolymers, terpolymers, etc. In general, the layers of a film can consist essentially of a single polymer, or can have still additional polymers together therewith, i.e., blended therewith.

As used herein, the term "copolymer" refers to polymers formed by the polymerization reaction of at least two different monomers. For example, the term "copolymer" includes the copolymerization reaction product of ethylene and an alpha-olefin, such as 1-hexene. However, the term "copolymer" is also inclusive of, for example, the copolymerization of a mixture of ethylene, propylene, 1-hexene, and 1-octene.

As used herein, a copolymer identified in terms of a plurality of monomers, e.g., "propylene/ethylene copolymer", refers to a copolymer in which either monomer may copolymerize in a higher weight or molar percent than the other monomer or monomers. However, the first listed monomer preferably polymerizes in a higher weight percent than the second listed monomer, and, for copolymers which are terpolymers, quadripolymers, etc., preferably the first monomer copolymerizes in a higher weight percent than the second monomer, and preferably the second monomer copolymerizes in a higher weight percent than the third monomer, etc.

As used herein, copolymers are identified, i.e, named, in terms of the monomers from which the copolymers are produced. For example, the phrase "propylene/ethylene copolymer" refers to a copolymer produced by the copolymerization of both propylene and ethylene, with or without additional comonomer(s).

As used herein, terminology employing a "/" with respect to the chemical identity of a copolymer (e.g., "an ethylene/alpha-olefin copolymer"), identifies the comonomers which are copolymerized to produce the copolymer. As used herein, "ethylene alpha-olefin copolymer" is the equivalent of "ethylene/alpha-olefin copolymer."

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts. Heterogeneous polymers are useful in various layers of the film used in the present invention. Although there are a few exceptions (such as TAFMER (TM) linear homogeneous ethylene/alpha-olefin copolymers produced by Mitsui Petrochemical Corporation, using Ziegler-Natta catalysts, for example, as disclosed in U.S. Patent No. 4,429,079, to Shibata et al.), heterogeneous polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers are useful in various layers of the multilayer film used in the present invention. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysis, rather than using Ziegler Natta catalysts.

More particularly, homogeneous ethylene/alpha-olefin copolymers may be characterized by one or more methods known to those of skill in the art, such as molecular weight distribution (M_{w}/Mₙ), composition distribution breadth index (CDBI), and narrow melting point range and single melt point behavior. The molecular weight distribution (M_{w}/Mₙ), also known as polydispersity, may be determined by gel permeation chromatography. The homogeneous ethylene/alpha-olefin copolymers useful in this invention generally has (M_{w}/Mₙ) of less than 2.7; preferably from about 1.9 to 2.5; more preferably, from about 1.9 to 2.3. The composition distribution breadth index (CDBI) of such homogeneous ethylene/alpha-olefin copolymers will generally be greater than about 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%. The Composition Distribution Breadth Index (CDBI) is determined via the technique of Temperature Rising Elution Fractionation (TREF). CDBI determination clearly distinguishes the homogeneous copolymers used in the present invention (narrow composition distribution as assessed by CDBI values generally above 70%) from heterogeneous polymers such as VLDPE's which are available commercially which generally have a broad composition distribution as assessed by CDBI values generally less than 55%. The CDBI of a copolymer is readily calculated from data obtained from techniques known in the art, such as, for example, TREF as described, for example, in Wild et. al., J. Poly. Sci. Phys. Ed., Vol. 20, p.441 (1982). Preferably, the homogeneous ethylene/alpha-olefin copolymers have a CDBI greater than about 70%, i.e., a CDBI of from about 70% to 99%. Such homogeneous polymers exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tₘ), as determined by Differential Scanning Colorimetry (DSC), of from about 60°C to 105°C. Preferably the homogeneous copolymer has a DSC peak Tₘ of from about 80°C to 100°C. As used herein, the phrase "essentially single melting point" means that at least about 80%, by weight, of the material corresponds to a single Tₘ peak at a temperature within the range of from about 60°C to 105°C, and essentially no substantial fraction of the material has a peak melting point in excess of about 115°C., as determined by DSC analysis. DSC measurements are made on a Perkin Elmer System 7 Thermal Analysis System. Melting information reported are second melting data, i.e., the sample is heated at a programmed rate of 10°C./min. to a temperature below its critical range. The sample is then reheated (2nd melting) at a programmed rate of 10°C/min. The presence of higher melting peaks is detrimental to film properties such as haze, and compromises the chances for meaningful reduction in the seal initiation temperature of the final film.

A homogeneous ethylene/alpha-olefin copolymer can, in general, be prepared by the copolymerization of ethylene and any one or more alpha-olefin. Preferably, the alpha-olefin is a C₃-C₂₀ alpha-monoolefin, more preferably, a C₄-C₁₂ alpha-monoolefin, still more preferably, a C₄-C₈ alpha-monoolefin. Still more preferably, the alpha-olefin comprises at least one member selected from the group consisting of butene-1, hexene-1, and octene-1, i.e., 1-butene, 1-hexene, and 1-octene, respectively. Most preferably, the alpha-olefin comprises octene-1, and/or a blend of hexene-1 and butene-1.

Processes for preparing and using homogeneous polymers are disclosed in U.S. Patent No. 5,206,075 to Hodgson, U.S. Patent No. 5,241,031, to Mehta. Further details regarding the production and use of homogeneous ethylene/alpha-olefin copolymers are disclosed in PCT International Publication Number WO 90/03414, to Exxon Chemical Patents, Inc, and PCT International Publication Number WO 93/03093, to Meka et al., each of which designates Exxon Chemical Patents, Inc. as the Applicant. Still another genus of homogeneous ethylene/alpha-olefin copolymers is disclosed in U.S. Patent No. 5,272,236, to LAI, et. al., and U.S. Patent No. 5,278,272, to LAI, et. al..

As used herein, the term "polyolefin" refers to any polymerized olefin, which can be linear, branched, cyclic, aliphatic, aromatic, substituted, or unsubstituted. More specifically, included in the term polyolefin are homopolymers of olefin, copolymers of olefin, copolymers of an olefin and a non-olefinic comonomer copolymerizable with the olefin, such as vinyl monomers, modified polymers thereof, and the like. Specific examples include polyethylene homopolymer, polypropylene homopolymer, polybutene, ethylene/alpha-olefin copolymer, propylene/alpha-olefin copolymer, butene/alpha-olefin copolymer, ethylene/vinyl acetate copolymer, ethylene/ethyl acrylate copolymer, ethylene/butyl acrylate copolymer, ethylene/methyl acrylate copolymer, ethylene/acrylic acid copolymer, ethylene/methacrylic acid copolymer, modified polyolefin resin, ionomer resin, polymethylpentene, etc. Modified polyolefin resin is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It could also be obtained by incorporating into the olefin homopolymer or copolymer, an unsaturated carboxylic acid, e.g., maleic acid, fumaric acid or the like, or a derivative thereof such as the anhydride, ester or metal salt or the like.

As used herein, terms identifying polymers, such as "polyamide", "polyester", "polyurethane", etc. are inclusive of not only polymers comprising repeating units derived from monomers known to polymerize to form a polymer of the named type, but are also inclusive of comonomers, derivatives, etc. which can copolymerize with monomers known to polymerize to produce the named polymer. For example, the term "polyamide" encompasses both polymers comprising repeating units derived from monomers, such as caprolactam, which polymerize to form a polyamide, as well as copolymers derived from the copolymerization of caprolactam with a comonomer which when polymerized alone does not result in the formation of a polyamide. Furthermore, terms identifying polymers are also inclusive of mixtures, blends, etc. of such polymers with other polymers of a different type. More preferably, however, the polyolefin is the polymerization product of one or more unsubstituted olefins, the polyamide is the polymerization product of one or more unsubstituted amides, etc.

The term "ionomer", as used herein, refers to a product of an ionic polymerization, i.e., a polymer containing interchain ionic bonding. Preferably, the ionomer comprises at least one member selected from the group consisting of a thermoplastic resin based on metal salt of an alkene/acid copolymer; more preferably, a thermoplastic resin based on metal salt of ethylene/acid copolymer; still more preferably, metal salt of ethylene/methacrylic acid copolymer. As used herein, the term "ionomer" also includes ethylene/acrylic acid copolymer and ethylene/acid/acrylate terpolymer.

As used herein, the phrase "ethylene alpha-olefin copolymer", and "ethylene/alpha-olefin copolymer", refer to such heterogeneous materials as linear low density polyethylene (LLDPE), and very low and ultra low density polyethylene (VLDPE and ULDPE); and homogeneous polymers such as metallocene-catalyzed EXACT (TM) linear homogeneous ethylene/alpha olefin copolymer resins obtainable from the Exxon Chemical Company, of Baytown, Texas, and TAFMER (TM) linear homogeneous ethylene/alpha-olefin copolymer resins obtainable from the Mitsui Petrochemical Corporation. All these materials generally include copolymers of ethylene with one or more comonomers selected from C₄ to C₁₀ alpha-olefin such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. The heterogeneous ethylene/alpha-olefin commonly known as LLDPE has a density usually in the range of from about 0.91 grams per cubic centimeter to about 0.94 grams per cubic centimeter. Other ethylene/alpha-olefin copolymers, such as the long chain branched homogeneous ethylene/alpha-olefin copolymers available from The Dow Chemical Company, known as AFFINITY (TM) resins, are also included as another type of homogeneous ethylene/ alpha-olefin copolymer useful in the present invention.

In general, the ethylene/alpha-olefin copolymer comprises a copolymer resulting from the copolymerization of from about 80 to 99 weight percent ethylene and from 1 to 20 weight percent alpha-olefin. Preferably, the ethylene/alpha-olefin copolymer comprises a copolymer resulting from the copolymerization of from about 85 to 95 weight percent ethylene and from 5 to 15 weight percent alpha-olefin.

As used herein, the phrases "inner layer" and "internal layer" refer to any layer, of a multilayer film, having both of its principal surfaces directly adhered to another layer of the film.

As used herein, the phrase "outer layer" refers to any film layer of film having less than two of its principal surfaces directly adhered to another layer of the film. The phrase is inclusive of the single layer of a monolayer and multilayer films. In multilayer films, there are two outer layers, each of which has a principal surface adhered to only one other layer of the multilayer film. In monolayer films, there is only one layer, which, of course, is an outer layer in that neither of its two principal surfaces are adhered to another layer of the film.

As used herein, the phrase "inside layer" refers to the outer layer, of a multilayer film packaging a product, which is closest to the product, relative to the other layers of the multilayer film. "Inside layer" also is used with reference to the innermost layer (which is also an outer layer) of a plurality of concentrically arranged layers extruded through one or more annular dies, as well as the inside layer of a backseamed casing or like article.

As used herein, the phrase "outside layer" refers to the outer layer, of a multilayer film packaging a product, which is furthest from the product relative to the other layers of the multilayer film. "Outside layer" also is used with reference to the outermost layer of a plurality of concentrically arranged layers extruded through one or more annular dies.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine direction.

As used herein, the phrase "free shrink" refers to the percent dimensional change in a 10 cm x 10 cm specimen of film, when shrunk at a given temperature, such as 85°C (185°F) with the quantitative determination being carried out according to ASTM D 2732, as set forth in the 1990 Annual Book of ASTM Standards, Vol. 08.02, pp.368-371, which is hereby incorporated, in its entirety, by reference thereto.

Although the film preferably has a film-to-film coefficient of friction of from about 0.1 to 0.9, more preferably the film has a film-to-film coefficient of friction of from about 0.1 to 0.7, still more preferably, from about 0.1-0.6, and yet still more preferably, from about 0.1 to 0.5.

Although the film of the present invention can be either a monolayer film or a multilayer film, preferably the film is a multilayer film. Preferably, the film has a total thickness of less than about 510 µm (20 mils) more preferably the film has a total thickness of from about 5.1 to 254 µm (0.2 to 10 mils), still more preferably from about 7.6 to 127µm (0.3 to 5 mils), and yet still more preferably, from about 38 to 102 µm (1.5 to 4 mils).

Optionally, the film of the present invention can be irradiated to induce crosslinking. In the irradiation process, the film is subjected to an energetic radiation treatment, such as corona discharge, plasma, flame, ultraviolet, X-ray, gamma ray, beta ray, and high energy electron treatment, which induce cross-linking between molecules of the irradiated material. The irradiation of polymeric films is disclosed in U.S. Patent No. 4,064,296, to BORNSTEIN, et. al. it discloses the use of ionizing radiation for crosslinking the polymer present in the film.

To produce crosslinking, a suitable radiation dosage of high energy electrons, preferably using an electron accelerator, with a dosage level being determined by standard dosimetry methods. Other accelerators such as a Van de Graaf generator or resonating transformer may be used. The radiation is not limited to electrons from an accelerator since any ionizing radiation may be used. The ionizing radiation can be used to crosslink the polymers in the film. Preferably, the film is irradiated at a level of from 2-15 MR (20-150 kGy), more preferably 2-10 MR (20-100 kGy). As can be seen from the descriptions of preferred films for use in the present invention, the most preferred amount of radiation is dependent upon the film composition, thickness, etc., and its end use.

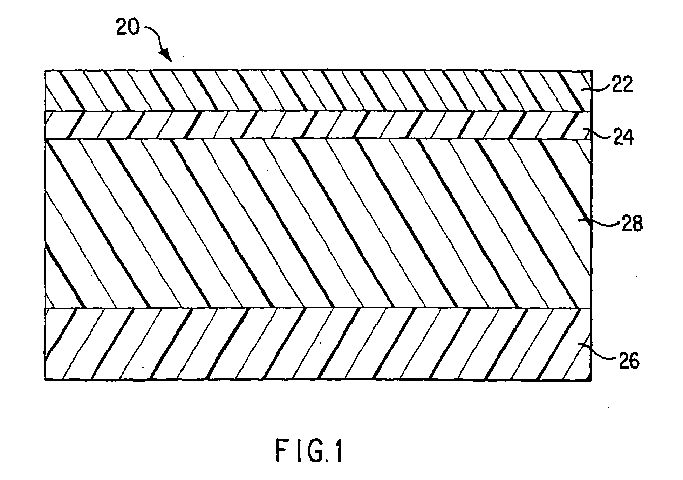

### FIGURE 1 DESCRIPTION

Figure 1 illustrates a cross-sectional view of a preferred multilayer film 20. First layer 22 is an outer layer which preferably serves as an outside abuse layer, and which, preferably, is also grease-resistant. Second layer 24 serves as a barrier to O₂. Third layer 26 is an outer film layer which preferably serves as an inside food-contact layer which is irradiated so that it is grease-resistant. Fourth layer 28 serves as a bulk layer, and is preferably irradiated.

### EXAMPLES 1-9

Nine multilayer films were produced, each multilayer film having a physical structure, in terms of number of layers, layer thickness, and layer arrangement, and a chemical composition in terms of the various polymers, etc. present in each of the layers, as set forth in Table I, below. This film is herein designated "Film No. 1", and is an example of a multilayer film according to the present invention.

**TABLE 1**

| (Identity of Films of Examples 1-9) | | | |
|---|---|---|---|
| Figure 1 Layer Designation | Layer Function | Layer Chemical Identity | Layer Thickness (mils) |
| | | | |
| 22 | outside, printable, and abuse-resistant | about 91-98% EVA; 2-9% ink-adhesion-enhancing polymer; 0.02-0.04 percent slip additive | 0.35 |
| | | | |
| 24 | O₂-barrier | PVDC Blend | 0.20 |
| | | | |
| 28 | bulk | irradiated EVA | 1.21 |
| | | | |
| 26 | grease-resistance & sealing | irradiated EVA | 0.54 |

EVA was ELVAX^{®} 3128 ethylene/vinyl acetate copolymer having a vinyl acetate content of 8.9%, a melt index of 2.0, and a density of 0.928 g/cc, obtained from E.I. DuPont de Nemours, of Wilmington, Delaware.

PVDC Blend was a composition comprising: (a) about 100 parts per hundred DOW MA134 (TM) vinylidene chloride/methyl acrylate copolymer having a methyl acrylate content of 8.5%, obtained from The Dow Chemical Company, of Midland, Michigan; (b) about 2 parts per hundred PLAS CHEK 775^{®} epoxidized soybean oil, obtained from Ferro Chemicals, of Bedford, Ohio; and, (c) about 2 parts per hundred METABLEN^{®} L1000 acrylate polymer, obtained from Elf Atochem, of Philadelphia, Pennsylvania. METABLEN L1000 (TM) comprises about 53 weight percent methyl methacrylate ("MMA"), 29 weight percent butylmethacrylate ("BMA"), and 19 weight percent butyl acrylate ("BA").

In Table 1 above, film layer 22 was formed by providing an extruder with a blend of about 91% EVA together with about 9% of a composition about 98% of which was an ink-adhesion-enhancing polymer, and about 2% was a slip agent. The ink-adhesion-enhancing polymer can comprise one or more of the following:
(1) Ink Adhesion Enhancing Polymer #1 (i.e., "IAEP#1") was LOTADER^{®} 2308 ethylene/butyl acrylate/maleic anhydride terpolymer, obtained from Elf Atochem, of Philadelphia, Pennsylvania;
(2) IAEP#2 was LOTADER^{®} 4110 ethylene/butyl acrylate/maleic anhydride terpolymer, obtained from Elf Atochem, of Philadelphia, Pennsylvania;
(3) IAEP#3 was LOTADER^{®} 3410 ethylene/butyl acrylate/maleic anhydride terpolymer, obtained from Elf Atochem, of Philadelphia, Pennsylvania;
(4) IAEP#4 was OREVAC^{®} 9314 anhydride grafted ethylene/vinyl acetate copolymer, obtained from Elf Atochem, of Philadelphia, Pennsylvania;
(5) IAEP#5 was SURLYN^{®} 1601 sodium ionomer of ethylene/methacrylic acid copolymer, obtained from E.I. DuPont de Nemours, of Wilmington, Delaware;
(6) IAEP#6 was SURLYN^{®} 1650 zinc ionomer of ethylene/methacrylic acid copolymer, obtained from E.I. DuPont de Nemours, of Wilmington, Delaware; and
(7) IAEP#7 was PRIMACOR 1410 [TM] ethylene/acrylic acid copolymer, obtained from The Dow Chemical Company, of Midland, Michigan
A preblend of the ink-adhesion-enhancing polymer and the slip agent can be compounded using a twin-screw compounder, a Banbury mixer, or any other blending apparatus as known to those of skill in the art.

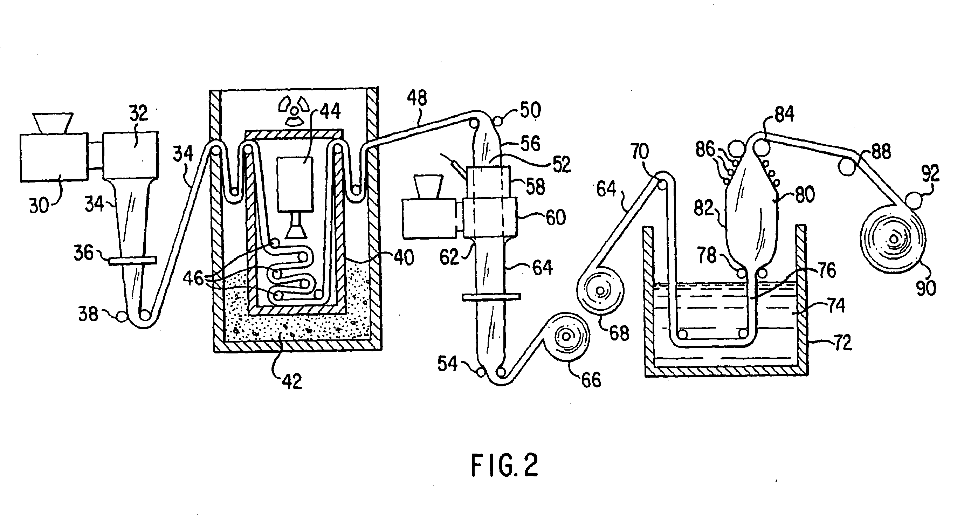

### FIGURE 2 DESCRIPTION

Film 20, illustrated in Figure 1, was produced in accordance with a preferred process as schematically illustrated in Figure 2. In the process illustrated in Figure 2, solid polymer beads (not illustrated) are fed to a plurality of extruders 30 (for simplicity, only one extruder is illustrated). Inside extruders 30, the polymer beads are forwarded, melted, and degassed, following which the resulting bubble-free melt is forwarded into die head 32, and extruded through an annular die, resulting in tubing 34 which is preferably about 16-30.

After cooling or quenching by water spray from cooling ring 36, tubing 34 is collapsed by pinch rolls 38, and is thereafter fed through irradiation vault 40 surrounded by shielding 42, where tubing 34 is irradiated with high energy electrons (i.e., ionizing radiation) from iron core transformer accelerator 44. Tubing 34 is guided through irradiation vault 40 on rolls 46. Preferably, tubing 34 is irradiated to a level of from about 3 to 8 MR.

After irradiation, irradiated tubing 48 is directed through pinch rolls 50, following which irradiated tubing 48 is slightly inflated, resulting in trapped bubble 52. However, at trapped bubble 50, slightly inflated, irradiated tubing 56 is not significantly drawn longitudinally, as the surface speed of nip rolls 54 are about the same speed as nip rolls 50. Furthermore, irradiated tubing 48 is inflated only enough to provide a substantially circular tubing without significant transverse orientation, i.e., without stretching.

Slightly inflated, irradiated tubing 56 is passed through vacuum chamber 58, and thereafter forwarded through coating die 60. Second tube 62 is melt extruded from coating die 60 and coated onto slightly inflated, irradiated tube 56, to form two-ply tubing 64. Second tubular film 62 preferably comprises an 02-barrier layer, which does not pass through the ionizing radiation. Further details of the above-described coating step are generally as set forth in U.S. Patent No. 4,278,738, to BRAX et. al., which is hereby incorporated by reference thereto, in its entirety. After irradiation and coating, two-ply tubing 64 is wound up onto windup roll 66.

Thereafter, windup roll 66 is removed and installed as unwind roll 68, on a second stage in the process of making the tubing film as ultimately desired. Two-ply tubing 64 is unwound from unwind roll 68, and is thereafter passed over guide roll 70, after which two-ply tubing 64 passes into hot water bath tank 72 containing hot water 74. The now collapsed, irradiated, coated tubing 76 is submersed in hot water 74 (having a temperature of about 85°C (185°F)) for a retention time of at least about 30 seconds, i.e., for a time period in order to bring the film up to the desired temperature for biaxial orientation. Thereafter, irradiated, coated tubing 76 is directed through nip rolls 78, and bubble 80 is blown, thereby transversely stretching irradiated, coated, tubing 76. Simultaneously, i.e., while tubing 76 is being transversely stretched, it is also drawn (i.e., oriented longitudinally) by providing nip rolls 84 with a higher surface speed than the surface speed of nip rolls 78. In this manner, biaxially oriented, heat-shrinkable film 82 is produced from tubing 76. Biaxially-oriented film 82 preferably has been both stretched in a ratio of from about 1:1.5 - 1:6, and drawn in a ratio of from about 1:1.5-1:6. More preferably, the stretching and drawing are each performed a ratio of from about 1:2 - 1:4. The result is a total biaxial orientation of from about 1:2.25 - 1:36, more preferably, 1:4 - 1:16. While bubble 80 is maintained between pinch rolls 78 and 84, biaxially oriented film 82 is collapsed by rolls 86, and thereafter conveyed through pinch rolls 84 and across guide roll 88, and then rolled onto wind-up roll 90. Idler roll 92 assures a good wind-up.

Using a process as illustrated in Figure 2 and as described above, a total of 16 films were made in accordance with the film of Table 1, using the process as schematically illustrated in Figure 2, as described immediately above. The films of Examples 1-10 varied in the amount of the slip agent and the type and amount of ink-adhesion-enhancing-polymer, i.e., "IAEP." The film of Control Example No. 1 contained neither slip agent nor IAEP in outer layer 22, while Comparative Examples 2-4 contained 400 ppm or 800 ppm of slip agent, but no IAEP in outer layer 22.

**TABLE 2**

| Film of Example Example No. | erucamide conc. (ppm) / silica or silica* (ppm in outer layer 22) | Identity of Ink-Adhesion-Enhancing Polymer (IAEP) | Total Machinability Score (x/15; where x=sum of all three criteria; (fresh;aged) | "Fresh film" Ink Adhesion (% failure) | "Aged Film" Ink Adhesion (% failure) | Ink-to-Ink Flake Test (% failure) |
|---|---|---|---|---|---|---|
| 1 (compar) | 0/0 | none | 3/15; 3/15 | 0 | 0 | 0 |
| 2 (compar) | 800/0 | none (LDPE) | 3/15; 12/15 | 100 | 30-50 | 20-50 |
| 3 (compar) | 800/0 | none (EVA) | 6/15; 10/15 | 100 | 30-50 | 10-30 |
| 4 | 800/0 | IAEP#1 | 8/15; 12/15 | 0 | 0 | 0 |
| 5 | 800/0 | IAEP#2 | 7/15; 8/15 | 0 | 0 | 0 |
| 6 | 400/0 | IAEP#3 | [not tested] | 0 | 0 | 0 |
| 7 | 400/0 | IAEP#4 | [not tested] | 0 | 0 | 0 |
| 8 | 400/0 | IAEP#5 | [not tested] | 0 | 0 | 0 |
| 9 | 400/0 | IAEP#6 | [not tested] | 0 | 0 | 0 |
| 10 | 800/0 | IAEP#7 | [not tested] | 5 | 0 | 0 |
| 11 | 800/5000 | IAEP#1 | 15/15; 15/15 | 0 | 0 | 0 |
| 12 | 800/5000* | IAEP#1 | 15/15; 15/15 | 0 | 0 | 0 |
| 13 | 800/5000 | IAEP#2 | 15/15; 15/15 | 0 | 0 | 0 |
| 14 | 800/5000* | IAEP#2 | 15/15; 15/15 | 0 | 0 | 0 |
| 15 (compar) | 800/5000 | none (LDPE) | 6/15; 15/15 | 100 | 30-50 | 20-50 |
| 16 (compar) | 800/5000* | none (LDPE) | 6/15; 15/15 | 100 | 30-50 | 20-50 |
| silica* = silicate (see below) | | | | | | |

In each of Examples 1-16, the additives were incorporated into the outside layer of the film tube, and in each case the film structure was as set forth in Table 1 above.

"Silica" was SYLOBLOC 47 (TM) SiO₂, obtained from W.R. Grace & Co. - CONN., Davison Division.

"Silicate-1" was NaCaAl(Si₂O₇), obtained from Mizusawa Industrial Chemicals, sold through International Resources of Columbia, Maryland.

"Erucamide" was Crodamide ER (TM), obtained from Croda Universal Inc., of Houston, Texas.

The "Ink-Ahesion-Promoting polymer" (i.e., IAEP) was as described above.

Machinability was determined on a bag converting machine operating at a commercial speed. Machinability score represents a qualitative assessment of performance during: (1) the feeding of the tubing during the sealing of the tubing during conversion of the tubing to bags, (2) the stacking of the bags, and (3) conveying of the bags. Regarding the feeding of the tubing, it is important that the film passes freely through the sealing station without jamming due to drag force between the film and the support (which is usually stainless steel) which is too high, or due to sticking on the seal jaws. Regarding the stacking of the bags, it is important that the bags can be "stacked" in a shingled relationship to one another after they are formed by sealing and cutting, without loss of edge alignment. Regarding the conveying of the bags, it is important that the shingled bags can be conveyed while maintaining a relatively straight, aligned relationship, i.e., without bags being shifted sideways, out of alignment along the length of the stream of shingled bags. For each of these three criteria, a qualitative score of 1-5 is assessed, with 1 representing poor performance and 5 representing excellent performance. As can be seen in Table 2, the Machinability score is a total of these three ratings for the performance of the film of the respective example.

Furthermore, it is desirable to be able to sample the bags without disturbing the straight line relationship of the shingled bags. If the coefficient of friction between the bags is too high, removing one or more bags results in disruption of the straight line relationship of the line of shingled bags.

Machinability scores are determined for both "fresh film" and "aged film." Fresh film was tested by extruding the film and thereafter converting the film into bags within one hour from the manufacture of the film itself. Aged film was tested by extruding the film and thereafter converting the film into bags at least one week from the time of manufacture of the film.

Ink adhesion was tested for both ink adhesion and ink-to-ink flake test. Ink adhesion was measured by a standard tape test using Scotch® #600 tape, in accordance with ASTM 2141-68, which is hereby incorporated, in its entirety, by reference thereto, with the results in Table 2 indicating the percent failure, i.e., the percentage of the printing which is removed by the tape. The ink-to-ink flake test was measured by cutting out a printed sample of the printed film, and thereafter rubbing printed surface to printed surface by hand for several seconds, and thereafter determining the percent failure, i.e., the percentage of the printing which has flaked off of the printed area.

The data provided in Table 2, above, demonstrates that films according to the present invention, i.e., the films of Examples 4-14, exhibit a better machinability, lower ink adhesion failure, and lower ink-to-ink flaking, than the films of Comparative Examples 1-3, 15 and 16. Thus, Table 2 provides evidence that films according to the present invention provide improved performance in the area of ink adhesion and machinability. The improved performance of the film according to the present invention is believed to be related to the combination of ink-adhesion-enhancing polymer and slip agent. The comparative films of Examples 2, 3, 15, and 16 were "comparative examples" in that they lacked the ink-adhesion-enhancing polymer in outer layer 22. Example 1 (comparative) lacked both the slip agent as well as the ink-adhesion-enhancing polymer. Examples 2-4 (all comparative) lacked the ink-adhesion-enhancing polymer.

In addition to ink-adhesion-enhancing polymer and slip agent, the outer layer of films of Examples 11-14 (Examples of the invention) and Examples 15 ad 16 (comparative) further contained spherical silica or silicate particulates, these particulates being blended with the polymer of the outer layer before and during extrusion. These silica or silicate particulates provided these films with additional machinability performance. However, the fresh films of Examples 11-14, which contained the ink-adhesion-enhancing polymer, had better machinability than the fresh films of comparative Examples 15 and 16. Furthermore, it can be seen that the incorporation of the particulate silica and silicates significantly enhanced machinability performance in films according to the present invention, as is apparent from a comparison of the machinability performance of the films of Examples 4 and 5 with the films of Examples 11-12 and 13-14, which contained, respectively, the same ink-adhesion-enhancing polymers.

The film of the present invention can be used for the packaging of a wide variety of products, including both food products as well as non-food products. Typical food products the film can be used to package include meat, preferably beef, pork, foul, fish, lamb, etc., both fresh as well as processed, e.g., sausage.

Although the present invention has been described in connection with the preferred embodiments, it is to be understood that modifications and variations may be utilized without departing from the principles and scope of the invention, as those skilled in the art will readily understand. Accordingly, such modifications may be practiced within the scope of the following claims.

## Claims

1. A film having printing on the outer surface thereof, wherein the outer layer of the film comprises:
(A) a primary polymer;
(B) a secondary polymer different from the primary polymer and which is effective to enhance ink adhesion to the outer surface, which secondary polymer is an alpha-olefin/acrylic ester copolymer, alphaolefin/unsaturated carboxylic acid copolymer, alpha-olefin/ionomer copolymer, an anhydride grafted ethylene/vinyl acetate copolymer or an alpha-olefin/ester/acid anhydride terpolymer; and
(C) a functional additive comprising a slip agent, comprising at least one fatty acid amide having a C₁₁ to C₂₁ alkyl group in the acid chain, oxidized polyethylene wax, fatty acid ester, fatty acid alcohol, glycerol monostearate, or metallic stearate.

2. A film according to claim 1 wherein the secondary polymer is:
(i) an alpha-olefin/ionomer copolymer;
(ii) an anhydride grafted alpha-olefin/acrylic ester copolymer; or
(iii) an alpha-olefin/acrylic acid copolymer.

3. A film according to claim 1 wherein the secondary polymer comprises alphaolefin/ester/acid anhydride terpolymer.

4. A film according to claim 1 wherein the outer layer further comprises an antifog agent or an antistatic agent.

5. A film according to claim 1 wherein the slip agent comprises a fatty acid amide selected from lauramide, palmitamide, stearamide, arachidamide, behenamide, oleamide, and erucamide.

6. A film according to claim 5 wherein the fatty acid amide is present in the outer layer in an amount from 0.005 to 5 weight percent, based on the weight of the outer layer.

7. A film according to any one of the preceding claims wherein the secondary polymer is present in an amount of at least 0.5 weight percent, based on the weight of the outer layer.

8. A film according to claim 7 wherein the secondary polymer is present in an amount from 1 to 20 weight percent, based on the weight of the outer layer.

9. A film according to claim 8 wherein the secondary polymer is present in an amount from 2 to 10 weight percent, based on the weight of the outer layer.

10. A film according to any one of the preceding claims wherein the primary polymer comprises at least one of ethylene/vinyl acetate copolymer, ethylene/alphaolefin copolymer, polyolefin homopolymer, polyvinylidene chloride, ethylene/vinyl alcohol copolymer, polyamide, polyester, and polystyrene.

11. A film according to any one of the preceding claims wherein the outer film layer further comprises inorganic substantially spherical particulates having an average particle size of from 0.1 to 30 µm in an amount of from 500 to 50,000 parts per million, based on the weight of the outer layer.

12. A film according to any one of the preceding claims which is a multilayer film comprising two outer layers, and wherein the primary polymer, secondary polymer, and functional additive are present in at least one of the outer layers.

13. A film according to claim 12 which is substantially symmetrical with respect to both layer thickness and layer chemical composition.

14. A film according to claim 12 or 13 which comprises an oxygen-barrier layer comprising at least one of polyvinylidene chloride, ethylene/vinyl alcohol copolymer, polyamide, and polyester.

15. A film according to claim 14 which comprises:
a first layer which is a first outer layer comprising primary polymer, secondary polymer, and functional additive, wherein the primary polymer comprises at least one of ethylene/vinyl acetate copolymer, ethylene/alpha-olefin copolymer, and polyamide;
a second layer, which is an inner layer and is an oxygen-barrier layer, comprising at least one of polyvinylidene chloride and ethylene/vinyl alcohol copolymer; and
a third layer which is a second outer layer, the third layer comprising at least one of ethylene/vinyl acetate copolymer, ethylene/alpha-olefin copolymer, and polyamide.

16. A film according to claim 15 further comprising a fourth layer between the second and the third layer, which fourth layer comprises at least one of ethylene/vinyl acetate copolymer, ethylene/alpha-olefin copolymer, and polyamide.

17. A film according to claim 16 wherein the third layer and the fourth layer each comprise crosslinked polymer, and wherein the first layer and second layer do not comprise crosslinked polymer.

18. A film according to claim 16 wherein all the film layers comprise crosslinked polymer.

19. A film according to claim 16, 17 or 18 further comprising:
a fifth layer, which is a first tie layer comprising at least one of ethylene/carboxylic acid copolymer, ethylene/ester copolymer, and anhydride-modified ethylene/alpha-olefin copolymer; and
a sixth layer, which is a second tie layer, comprising at least one of ethylene/carboxylic acid copolymer, ethylene/ester copolymer, and anhydride-modified ethylene/alpha-olefin copolymer;
wherein the fifth layer is between the first layer and the second layer and the sixth layer is between the second layer and the fourth layer.

20. A film according to any one of the preceding claims which is biaxially oriented and heat-shrinkable.

21. A film according to claim 20, which has a total free shrink, at 85°C (185°F) of from 10 to 140 percent.

22. A film according to any one of claims 1 to 11 which is a monolayer film.

23. A bag comprising a film according to any one of the preceding claims.

24. An article having a printed portion thereof, which printed portion comprises:
(A) a primary polymer;
(B) a secondary polymer different from the primary polymer and which is effective to enhance ink adhesion to the outer surface, which secondary polymer is an alpha-olefin/acrylic ester copolymer, alphaolefin/acrylic acid copolymer, alpha-olefin/ionomer copolymer or an anhydride grafted ethylene/vinyl acetate copolymer or an alpha-olefin/ester/acid anhydride terpolymer; and
(C) a functional additive comprising a slip agent, comprising at least one fatty acid amide having a C₁₁ to C₂₁ alkyl group in the acid chain, oxidized polyethylene wax, fatty acid ester, fatty acid alcohol, glycerol monostearate, or metallic stearate.

25. An article according to claim 24 wherein the printed portion further comprises inorganic substantially spherical particulates having an average particle size of from 0.1 to 30 µm.

## Patentansprüche

1. Folie mit Bedruckung auf der äußeren Oberfläche derselben, wobei die äußere Schicht der Folie umfasst:
(A) primäres Polymer,
(B) sekundäres Polymer, das von dem primären Polymer verschieden ist und die Haftung von Tinte an der äußeren Oberfläche vergrößert, wobei das sekundäre Polymer α-Olefin/Acrylester-Copolymer, α-Olefin/ungesättigte Carbonsäure-Copolymer, α-Olefin/Ionomer-Copolymer, anhydridgepfropftes Ethylen/Vinylacetat-Copolymer oder α-Olefin/-Ester/Säureanhydrid-Terpolymer ist, und
(C) funktionelles Additiv, das Gleitmittel umfasst, das mindestens ein Fettsäureamid mit einer C₁₁- bis C₂₁-Alkylgruppe in der Säurekette, oxidiertes Polyethylenwachs, Fettsäureester, Fettsäurealkohol, Glycerinmonostearat oder metallisches Stearat umfasst.

2. Folie nach Anspruch 1, bei der das sekundäre Polymer
(i) α-Olefin/Ionomer-Copolymer,
(ii) anhydridgepfropftes α-Olefin/Acrylester-Copolymer oder
(iii) α-Olefin/Acrylsäure-Copolymer ist.

3. Folie nach Anspruch 1, bei der das sekundäre Polymer α-Olefin/Ester/Säureanhydrid-Terpolymer umfasst.

4. Folie nach Anspruch 1, bei dem die äußere Schicht ferner Antitrübungsmittel oder Antistatikmittel umfasst.

5. Folie nach Anspruch 1, bei der das Gleitmittel Fettsäureamid ausgewählt aus Lauramid, Palmitamid, Stearamid, Arachidamid, Behenamid, Oleamid und Erucamid umfasst .

6. Folie nach Anspruch 5, bei der das Fettsäureamid in der äußeren Schicht in einer Menge von 0,005 bis 5 Gew.-%, bezogen auf das Gewicht der äußeren Schicht, vorhanden ist.

7. Folie nach einem der vorhergehenden Ansprüche, bei der das sekundäre Polymer in einer Menge von mindestens 0,5 Gew.-%, bezogen auf das Gewicht der äußeren Schicht, vorhanden ist.

8. Folie nach Anspruch 7, bei der das sekundäre Polymer in einer Menge von 1 bis 20 Gew.-%, bezogen auf das Gewicht der äußeren Schicht, vorhanden ist.

9. Folie nach Anspruch 8, bei der das sekundäre Polymer in einer Menge von 2 bis 10 Gew.-%, bezogen auf das Gewicht der äußeren Schicht, vorhanden ist.

10. Folie nach einem der vorhergehenden Ansprüche, bei der das primäre Polymer mindestens eines von Ethylen/Vinylacetat-Copolymer, Ethylen/α-Olefin-Copolymer, Polyolefin-Homopolymer, Polyvinylidenchlorid, Ethylen/Vinylalkohol-Copolymer, Polyamid, Polyester und Polystyrol umfasst.

11. Folie nach einem der vorhergehenden Ansprüche, bei der die äußere Folienschicht ferner anorganische, im Wesentlichen kugelförmige Teilchen mit einer durchschnittlichen Teilchengröße von 0,1 bis 30 µm in einer Menge von 500 bis 50 000 Teilen pro Million, bezogen auf das Gewicht der äußeren Schicht, umfasst.

12. Folie nach einem der vorhergehenden Ansprüche, die eine Mehrschichtfolie ist, die zwei äußere Schichten umfasst, und bei der das primäre Polymer, das sekundäre Polymer und das funktionelles Additiv in mindestens einer der Außenschichten vorhanden sind.

13. Folie nach Anspruch 12, die im Wesentlichen sowohl hinsichtlich der Schichtdicke als auch der chemischen Schichtzusammensetzung symmetrisch ist.

14. Folie nach Anspruch 12 oder 13, die eine Sauerstoffsperrschicht umfasst, die mindestens eines von Polyvinylidenchlorid, Ethylen/Vinylalkohol-Copolymer, Polyamid und Polyester umfasst .

15. Folie nach Anspruch 14, die umfasst:
eine erste Schicht, die eine erste Außenschicht ist, die primäres Polymer, sekundäres Polymer und funktionelles Additiv umfasst, wobei das primäre Polymer mindestens eines von Ethylen/Vinylacetat-Copolymer, Ethylen/α-Olefin-Copolymer und Polyamid umfasst,
eine zweite Schicht, die eine innere Schicht ist und eine Sauerstoffsperrschicht ist, die mindestens eines von Polyvinylidenchlorid und Ethylen/Vinylalkohol-Copolymer umfasst, und
eine dritte Schicht, die eine zweite äußere Schicht ist, wobei die dritte Schicht mindestens eines von Ethylen/Vinylacetat-Copolymer, Ethylen/α-Olefin-Copolymer und Polyamid umfasst.

16. Folie nach Anspruch 15, die ferner eine vierte Schicht zwischen der zweiten und der dritten Schicht umfasst, wobei die vierte Schicht mindestens eines von Ethylen/Vinylacetat-Copolymer, Ethylenb/α-Olefin-Copolymer und Polyamid umfasst.

17. Folie nach Anspruch 16, bei der die dritte Schicht und die vierte Schicht jeweils vernetztes Polymer umfassen, und bei der die erste Schicht und die zweite Schicht kein vernetztes Polymer umfassen.

18. Folie nach Anspruch 16, bei der alle Folienschichten vernetztes Polymer umfassen.

19. Folie nach Anspruch 16, 17 oder 18, die ferner umfasst:
eine fünfte Schicht, die eine erste Verbindungsschicht ist, die mindestens eines von Ethylen/Carbonsäure-Copolymer, Ethylen/Ester-Copolymer und anhydrididmodifiziertes Ethylen/α-Olefin-Copolymer umfasst, und
eine sechste Schicht, die eine zweite Verbindungsschicht ist, die mindestens eines von Ethylen/Carbonsäure-Copolymer, Ethylen/Ester-Copolymer und anhydridmodifiziertes Ethylen/α-Olefin-Copolymer umfasst,
wobei die fünfte Schicht zwischen der ersten Schicht und der zweiten Schicht angeordnet ist und die sechste Schicht zwischen der zweiten Schicht und der vierten Schicht angeordnet ist.

20. Folie nach einem der vorhergehenden Ansprüche, die biaxial orientiert und wärmeschrumpfbar ist.

21. Folie nach Anspruch 20, die bei 85 °C (185 °F) eine gesamte freie Schrumpfung von 10 bis 140 % aufweist.

22. Folie nach einem der Ansprüche 1 bis 11, die eine Einschichtfolie ist.

23. Beutel, der eine Folie gemäß einem der vorhergehenden Ansprüche umfasst.

24. Gegenstand mit einem bedruckten Teil desselben, wobei der bedruckte Teil umfasst:
(A) primäres Polymer,
(B) sekundäres Polymer, das von dem primären Polymer verschieden ist und die Tintenhaftung an der äußeren Oberfläche vergrößert, wobei das sekundäre Polymer α-Olefin/Acrylester-Copolymer, α-Olefin/Acrylsäure-Copolymer, α-Olefin/Ionomer-Copolymer oder anhydridgepfropftes Ethylen/Vinylacetat-Copolymer oder α-Olefin/Ester/Säureanhydrid-Terpolymer ist, und
(C) funktionelles Additiv, das Gleitmittel umfasst, das mindestens ein Fettsäureamid mit einer C₁₁- bis C₂₁-Alkylgruppe in der Säurekette, oxidiertes Polyethylenwachs, Fettsäureester, Fettsäurealkohol, Glycerinmonostearat oder metallisches Stearat umfasst.

25. Gegenstand nach Anspruch 24, bei dem der bedruckte Teil ferner anorganische, im Wesentlichen kugelförmige Teilchen mit einem durchschnittlichen Teilchendurchmesser von 0,1 bis 30 µm umfasst.

## Revendications

1. Film ayant une impression à sa surface externe, où la couche externe du film comprend :
(A) un polymère primaire :
(B) un polymère secondaire différent du polymère primaire et qui est efficace pour améliorer l'adhérence de l'encre à la surface externe, lequel polymère secondaire est un copolymère d'alpha-oléfine/ester acrylique, un copolymère d'alpha-oléfine/acide carboxylique insaturé, un copolymère d'alpha-oléfine/ionomère, un copolymère d'éthylène greffé d'anhydride/acétate de vinyle ou un terpolymère d'alpha-oléfine/ester/anhydride d'acide ;
(C) un additif fonctionnel comprenant un agent de glissement comprenant au moins un amide d'acide gras ayant un groupe alkyle C₁₁ à C₂₁ dans la chaîne d'acide, une cire de polyéthylène oxydé, un ester d'acide gras, un alcool d'acide gras, du monostéarate de glycérol, ou un stéarate métallique.

2. Film selon la revendication 1, où le polymère secondaire est :
(i) un copolymère d'alpha-oléfine/ionomère ;
(ii) un copolymère d'alpha-oléfine greffée d'anhydride/ester acrylique ; ou
(iii) un copolymère d'alpha-oléfine/acide acrylique

3. Film selon la revendication 1, où le polymère secondaire comprend un terpolymère d'alpha-oléfine/ester/anhydride d'acide.

4. Film selon la revendication 1, où la couche externe comprend de plus un agent anti-brouillard ou un agent antistatique.

5. Film selon la revendication 1, où l'agent de glissement comprend un amide d'acide gras sélectionné parmi lauramide, palmitamide, stéaramide, arachidamide, béhénamide, oléamide, et érucamide.

6. Film selon la revendication 5, où l'amide d'acide gras est présent dans la couche externe en une quantité de 0,005 à 5 pour cent en poids, en se basant sur le poids de la couche externe.

7. Film selon l'une quelconque des revendications précédentes où le polymère secondaire est présent en une quantité d'au moins 0,5 pour cent en poids, en se basant sur le poids de la couche externe.

8. Film selon la revendication 7, où le polymère secondaire est présent en une quantité de 1 à 20 pour cent en poids, en se basant sur le poids de la couche externe.

9. Film selon la revendication 8, où le polymère secondaire est présent en une quantité de 2 à 10 pour cent en poids, en se basant sur le poids de la couche externe.

10. Film selon l'une quelconque des revendications précédentes, où le polymère primaire comprend au moins l'un d'un copolymère d'éthylène/acétate de vinyle, d'un copolymère d'éthylène/alpha-oléfine, d'un homopolymère de polyoléfine, de chlorure de polyvinylidène, d'un copolymère d'éthylène/alcool vinylique, de polyamide, de polyester et de polystyrène.

11. Film selon l'une quelconque des revendications précédentes, où la couche du film externe comprend de plus des matières particulaires inorganiques et sensiblement sphériques ayant une dimension moyenne de particules de 0,1 à 30 µm, en une quantité de 500 à 50 000 parties par million, en se basant sur le poids de la couche externe.

12. Film selon l'une quelconque des revendications précédentes qui est un film multicouche comprenant deux couches externes, et où le polymère primaire, le polymère secondaire et l'additif fonctionnel sont présents dans au moins l'une des couches externes.

13. Fil selon la revendication 12 qui est sensiblement symétrique par rapport à la fois à l'épaisseur des couches et à la composition chimique des couches.

14. Film selon la revendication 12 ou 13 qui comprend une couche formant barrière contre l'oxygène comprenant au moins l'un de chlorure de polyvinylidène, copolymère d'éthylène/alcool vinylique, polyamide, et polyester.

15. Film selon la revendication 14 qui comprend :
une première couche qui est une première couche externe comprenant un polymère primaire, un polymère secondaire et un additif fonctionnel où le polymère primaire comprend au moins l'un d'un copolymère d'éthylène/acétate de vinyle, d'un copolymère d'éthylène/alpha-oléfine et de polyamide ;
une deuxième couche qui est une couche interne et est une couche formant barrière contre l'oxygène, comprenant au moins l'un de chlorure de polyvinylidène et d'un copolymère d'éthylène/alcool vinylique ; et
une troisième couche qui est une seconde couche externe, la troisième couche comprenant au moins l'un d'un copolymère d'éthylène/acétate de vinyle, d'un copolymère d'éthylène/alpha-oléfine et d'un polyamide.

16. Film selon la revendication 15 comprenant de plus une quatrième couche entre les deuxième et troisième couches, laquelle quatrième couche comprend au moins l'un d'un copolymère d'éthylène/acétate de vinyle, d'un copolymère d'éthylène/alpha-oléfine, et d'un polyamide.

17. Film selon la revendication 16, où la troisième couche et la quatrième couche comprennent chacun un polymère réticulé, et où la première couche et la deuxième couche ne comprennent pas de polymère réticulé.

18. Film selon la revendication 16 où toutes les couches du film comprennent un polymère réticulé.

19. Film selon la revendication 16, 17 ou 18 comprenant de plus :
une cinquième couche qui est une première couche d'attache comprenant au moins l'un d'un copolymère d'éthylène/acide carboxylique, d'un copolymère d'éthylène/ester et d'un copolymère d'éthylène modifié par un anhydride/alpha-oléfine ; et
une sixième couche, qui est une seconde couche d'attache, comprenant au moins l'un d'un copolymère d'éthylène/acide carboxylique, d'un copolymère d'éthylène/ester et d'un copolymère d'éthylène modifié par un anhydride/alpha-oléfine ;
où la cinquième couche est entre la première couche et la deuxième couche et la sixième couche est entre la deuxième couche et la quatrième couche.

20. Film selon l'une quelconque des revendications précédentes qui est biaxialement orienté et thermorétractable.

21. Film selon la revendication 20, qui a un rétrécissement total, à 85°C (185°F), de 10 à 140 pour cent.

22. Film selon l'une quelconque des revendications 1 à 11 qui est un film monocouche.

23. Sac comprenant un film selon l'une quelconque des revendications précédentes.

24. Article ayant une portion imprimée, laquelle portion imprimée comprend :
(A) un polymère primaire ;
(B) un polymère secondaire différent du polymère primaire et qui est efficace pour améliorer l'adhérence de l'encre à la surface externe, lequel polymère secondaire est un copolymère d'alpha-oléfine/ester acrylique, un copolymère d'alpha-oléfine/acide acrylique, un copolymère d'alpha-oléfine/ionomère ou un copolymère d'éthylène greffé d'anhydride/acétate de vinyle ou un terpolymère d'alpha-oléfine/ester/anhydride d'acide, et
(C) un additif fonctionnel comprenant un agent de glissement comprenant au moins un amide d'acide gras ayant un groupe alkyle C₁₁ à C₂₁ dans la chaîne d'acide, une cire de polyéthylène oxydé, un ester d'acide gras, un alcool d'acide gras, du monostéarate de glycérol, ou un stéarate métallique.

25. Article selon la revendication 24 où la portion imprimée comprend de plus des matières particulaires inorganiques sensiblement sphériques ayant une dimension moyenne de particules de 0,1 à 30 µm.
